# EUROPEAN PATENT SPECIFICATION

(11) **EP 2 771 183 B1**
(45) Date of publication and mention of the grant of the patent: **11.08.2021**
(21) Application number: 12781019.0
(22) Date of filing: 25.10.2012
(51) Int. Cl.: B32B 9/02, B32B 27/36, B32B 9/04

(54) **MULTILAYER FILM STRUCTURE COMPRISING RENEWABLY SOURCED MATERIALS**
MEHRLAGIGE FOLIENSTRUKTUR MIT MATERIALIEN AUS ERNEUERBAREN QUELLEN
STRUCTURE DE FILM MULTICOUCHE COMPORTANT DES MATÉRIAUX PROVENANT DE RESSOURCES RENOUVELABLES

(30) Priority: 26.10.2011 US 201161551625 P
(43) Date of publication of application: 03.09.2014
(73) Proprietor: Performance Materials NA, Inc., Midland, Michigan 48674 (US)
(72) Inventor: HAUSMANN, Karlheinz, 2012 Auverinier (DE); TROUILHET, Yves M., F-CH-1222 Vesenaz (FR); SCHIFFMANN, Juergen, DE-53773 Hennef (DE)
(74) Representative: Boult Wade Tennant LLP
(86) International application number: PCT/US2012/061980
(87) International publication number: WO 2013/063310

(56) References cited:
- EP-A1- 2 351 644
- EP-A1- 2 351 646
- EP-B1- 2 051 854
- US-A1- 2003 039 775
- US-A1- 2010 330 382
- US-A1- 2011 171 489
- US-A1- 2012 058 346
- None

## Description

The present invention relates to a process for producing a coextruded multilayer structure comprising renewably sourced materials that can be used in packaging applications, in particular in food packaging applications.

### BACKGROUND OF THE INVENTION

Coextruded multilayer film structures are complex assemblies that may require careful combination of multiple functional layers in order to achieve a desired end-product.

In the past, processes such as calendaring, extrusion coating, film blowing and (extrusion) lamination have been developed to manufacture multilayered films structures and are still used up to date.

In calendaring and lamination processes, the individual layers that may make up the final structure are stacked on top of each other in the desired sequence, and are then subjected to heat and pressure. The applied heat may melt, or at least sufficiently soften, the individual layers, whereas the applied pressure may push the molten or softened layers together. When the pressure and heat are released, the individual layers may form one continuous coextruded multilayer film structure that can be used in a variety of applications.

In extrusion coating or extrusion lamination, the combination of various layers is achieved by passing a single or multilayered film under a slit die extruder at a preset speed. The veil of molten polymer exits the slit die, and is deposited onto the passing film in a nip which is cooled to solidify the polymer.

The above methods can be successfully used in the manufacture of multilayer films where the properties pertaining to the individual layers such as oxygen barrier, vapor transmission rate, mechanical stability, can be unified and combined in one structure.

For instance, the combination of mechanical resistance with low temperature sealing behavior in a multilayer film may be obtained by laminating or calendaring a mechanically resistant, bi-axially oriented polyethylene terephthalate (PET) sheet to a sheet of a low temperature sealing polyolefin sealant at temperatures of about 160°C, or by extrusion coating a layer of molten polyolefin sealant onto the bi-axially oriented polyethylene terephthalate film at temperatures above 160°C.

However, PET is mostly derived from petrochemical ingredients, and is therefore less desirable over alternative polymers that can be derived from renewable sources and which are biodegradable.

Polylactic acid (PLA) is a poly(hydroxyalkanoic acid) (PHA) that can be partially or wholly derived from renewable materials originating from corn, wheat and other plant sources, with the added benefit or being biodegradable.

In addition, when PLA is bi-axially oriented, it provides at least equivalent barrier functions when compared to petro-chemically sourced polymers such as for example PET, and increased mechanical stability.

Oriented polylactic acid may shrink by more than 10% in at least one direction when heated to a typical lamination temperatures such as temperature in excess of 160°C, which is a typical and necessary temperature to laminate, extrusion laminate or extrusion coat, for example, a polyolefin sealant layer onto a film.

Because of this inherent thermal shrinking behavior, it is difficult to combine monoaxially or bi-axially oriented polylactic acid layers with other functional layers using the above-mentioned calendaring, heat lamination or extrusion coating methods without running into severe problems.

On the one hand, the extensive heat shrinkage of an oriented polylactic acid film may create creases, folds and bulges, as well as an inhomogeneous thickness of the polylactic acid film, while on the other hand, the loss of crystallinity due to the heat shrinkage may result in a significant reduction of barrier properties.

In addition, the adhesion between the polylactic acid layer and a polyolefin sealant layer may suffer significantly due to the shrinkage.

The problem of heat shrinkage of oriented polylactic acid films may be circumvented by laminating a polylactic acid film to other functional layers using solvent based adhesives, but this represents an additional working step and furthermore raises concerns about pollution by solvents and migration of adhesive reaction products from the laminate into the packaged goods.

The problem of heat shrinkage of oriented polylactic acid films cannot be easily circumvented, as the majority of polyolefin sealants used in combination with oriented polyester films such as biaxially oriented PET necessitate lamination, calendaring or extrusion temperatures well above their melting temperatures which are normally around 100°C.

Thus, there is a need for multilayer film structures comprising at least one layer of oriented polylactic acid polymer in combination with other functional layers and which can be manufactured easily and economically in an industrial process and which at least partially remedy the above mentioned heat shrinkage problems.

### SUMMARY OF THE INVENTION

The above-disclosed problems can be solved by the invention, which provides a process for producing a coextruded multilayer structure comprising coextruding a poly(hydroxyalkanoic acid) polymer composition, a tie layer composition, and a sealant layer composition to produce a multilayer structure; cooling the multilayer film structure in a first bubble to produce a tubular multilayer structure; orienting the tubular multilayer structure under heating in a second bubble to produce an oriented tubular multilayer structure; and relaxing the oriented tubular multilayer structure under heating in a third bubble; wherein the tie layer composition comprises one or more olefin homopolymers and/or copolymers, and wherein the sealant layer composition comprises one or more olefin homopolymers and/or copolymers capable of fusion bonding on another layer by conventional means of heat sealing.

### BRIEF DESCRIPTION OF THE DRAWINGS

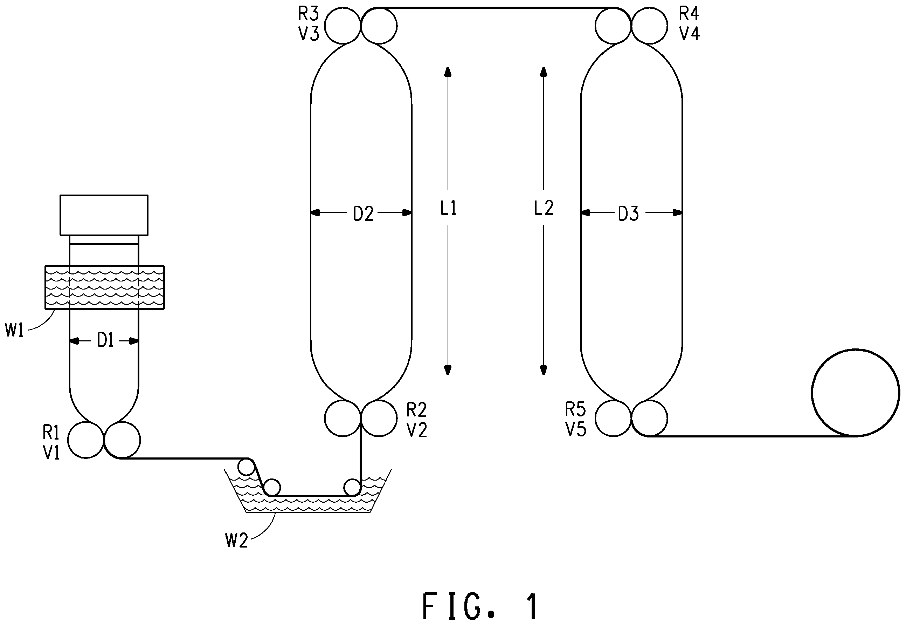

FIG. 1 shows a schematic overview of the triple bubble process of the invention.

### DETAILED DESCRIPTION OF THE INVENTION

The term "renewable polymer" means a polymer that are entirely or partially prepared from renewably sourced starting materials which can be replenished within a short period or a few years, such as for example vegetal starting materials, in a preferably sustainable fashion. The content of renewably sourced starting material in a polymer can be determined by the C14 method described in ASTM 6686-08.

A coextruded and oriented (mono- or bi-axially oriented) multilayer structure can be produced in a triple bubble process and to reduce the thickness of the at least one layer of PHA composition down to 2 to 3 micrometers while at the same time having a bubble stability comparable to that conferred by having at least one layer of a conventional semi aromatic polyester such as PET, by setting the blowing and orientation temperature in the second bubble to a temperature between the glass transition temperature and the melting point of the PHA composition such as a temperature range of from 60°C to 85°C.

The coextruded multilayer structures may be partially or entirely manufactured from renewably sourced starting materials.

The PHA composition can be derived entirely from renewably sourced starting materials and the PHA composition can comprise at least one PHA polymer.

PHA polymers are biodegradable polymers and a large number thereof are produced on an industrial scale by bacterial fermentation processes or isolated from vegetal matter that includes corn, sweet potatoes, and the like.

PHA polymers can also be polycondensates of one or more hydroxyalkanoic acids. Examples of such hydroxyalkanoic acids that may be comprised in the PHA polymer are glycolic acid, hydroxypropanoic acid (also know as lactic acid), hydroxybutyric acid, hydroxyisobutanoic acid, hydroxypentanoic acid (also known as hydroxyvaleric acid), hydroxyhexanoic acid (also known as polycaprolactone, PCL), hydroxyheptanoic acid, hydroxyoctanoic acid, hydroxydecanoic acid, hydroxydodecanoic acid, hydroxytetradecanoic acid, or combinations of two of more thereof.

Preferred PHA can comprise polycondensate of glycolic acid, lactic acid, hydroxybutyric acid, or combinations of two or more thereof. More preferably, the PHA comprises polycondensate of lactic acid.

Polycondensate of lactic acid include poly(lactic acid) (PLA) homopolymers and copolymers of lactic acid and other monomers containing at least 50 mol-% of repeat units derived from lactic acid, its derivatives and mixtures thereof having an average molecular weight of 3,000 to 1,000,000 g/mol, 10,000 to 800,000 g/mol, 20,000 to 700,000 g/mol, 20,000 to 600,000 g/mol, or 30,000 to 700,000 g/mol.

For example, PLA may contain at least 70 mol % of repeat units derived from (e.g., made by) lactic acid or its derivatives. PLA can be derived from d-lactic acid, l-lactic acid, or racemic mixtures thereof.

PHA polymers may be produced by bulk polymerization. The bulk polymerization is usually carried out using either a continuous process that is described in JP03-502115A, JP07-26001A, and JP07-53684A or a batch process that is described in US2668162 and US3297033. PHA polymers may be synthesized through the dehydration-polycondensation of the corresponding hydroxyalkanoic acid. PHA polymers may be synthesized through the dealcoholization-polycondensation of an alkyl ester of hydroxyalkanoic acid or by ring-opening polymerization of a cyclic derivative such as the corresponding lactone or cyclic dimeric ester. PHA polymers and copolymers may also be made by living organisms or isolated from plant matter. US6323010 discloses a number of PHA copolymers prepared from genetically modified organisms.

The PHA composition of the coextruded multilayer film structure may further comprise modifiers and other additives, including without limitation, plasticizers, impact modifiers, stabilizers including viscosity stabilizers and hydrolytic stabilizers, lubricants, antioxidants, UV light stabilizers, antifog agents, antistatic agents, dyes, pigments or other coloring agents, fillers, flame retardant agents, reinforcing agents, foaming and blowing agents and processing aids known in the polymer compounding art like for example antiblock agents and release agents.

These additives may be present in the PHA composition of the present invention in amounts of up to 20 weight percent, preferably of from 0.01 to 7 weight percent, and more preferably from 0.01 to 5 weight percent, the weight percentage being based on the total weight of the PHA composition.

The thickness of the PHA layer may depend on the end-use of the coextruded multilayer structure and can range of from 1 to 1000 µm, with the range of 1 to 100 µm being the commercially relevant because of weight reduction. Typically, when used in a flexible multilayer packaging structure, the outermost layer, which would be the PLA layer, has a thickness of from 1 to 50 µm, preferably of from 1 to 10 µm and when used in a rigid multilayer structure, it can have a thickness of from 10 to 1000 µm.

The tie layer adheres the PHA layer to the sealant layer and can be in direct contact with both the sealant layer and the PHA layer. The tie layer comprises one or more olefin polymers (homopolymers and/or copolymers). For example, the olefin polymer can be selected from the group consisting of polyethylene, propylene homopolymers and/or copolymers, ethylene copolymers, and combinations of two or more thereof.

Polyethylenes are preferably selected from homopolymers and copolymers of ethylene. Various types of polyethylene homopolymers may be used in the tie layer, like for example, ultra low density polyethylene, very low density polyethylene, low density polyethylene, linear low density polyethylene, high density polyethylene, or metallocene polyethylene.

Polyethylene may be made by any available process known in the art including high pressure gas, low pressure gas, solution and slurry processes employing conventional Ziegler-Natta, metallocene, and late transition metal complex catalyst systems.

Polypropylenes include homopolymers, random copolymers, block copolymers, terpolymers of propylene, or combinations or two or more thereof. Copolymers of propylene include copolymers of propylene with other olefin such as ethylene, 1-butene, 2-butene and the various pentene isomers, etc. and preferably copolymers of propylene with ethylene. Terpolymers of propylene include copolymers of propylene with ethylene and one other olefin. Random copolymers (statistical copolymers) have propylene and the comonomer(s) randomly distributed throughout the polymeric chain in ratios corresponding to the feed ratio of the propylene to the comonomer(s). Block copolymers are made up of chain segments consisting of propylene homopolymer and of chain segments consisting of, for example, random copolymers of propylene and ethylene.

Polypropylene homopolymers or random copolymers can be manufactured by any known process (e.g., using Ziegler-Natta catalyst, based on organometallic compounds or on solids containing titanium trichloride). Block copolymers can be manufactured similarly, except that propylene is generally first polymerized by itself in a first stage and propylene and additional comonomers such as ethylene are then polymerized, in a second stage, in the presence of the polymer obtained during the first.

Because the processes for making olefin polymers are well known to one skilled in the art, the description of which is omitted herein for the interest of brevity.

Ethylene copolymer refers to a polymer comprising repeat units derived from ethylene and at least one additional monomer.

The ethylene copolymer may be chosen among ethylene α-olefin copolymers, ethylene vinyl acetate copolymers, ethylene alkyl (meth)acrylate copolymers, or combinations of two or more thereof.

Alkyl (meth)acrylate refers to alkyl acrylate and/or alkyl methacrylate.

Ethylene alkyl (meth)acrylate copolymers are thermoplastic ethylene copolymers derived from the copolymerization of ethylene comonomer and at least one alkyl (meth)acrylate comonomer, wherein the alkyl group contains from one to ten carbon atoms and preferably from one to four carbon atoms.

Preferably, the ethylene copolymer is an ethylene α-olefin copolymer, ethylene vinyl acetate copolymer, ethylene methyl (meth)acrylate copolymer, ethylene ethyl (meth)acrylate copolymer, ethylene butyl (meth)acrylate copolymer, or combinations of two or more thereof.

In the case where the tie layer comprises an ethylene copolymer, the ethylene copolymer is preferably an ethylene α-olefin copolymer which comprises ethylene and an α-olefin of three to twenty carbon atoms, preferably of four to eight carbon atoms.

The density of the ethylene α-olefin copolymers ranges from 0.86 g/cm³ to 0.925 g/cm³, 0.86 g/cm³ to 0.91 g/cm³, 0.86 g/cm³ to 0.9 g/cm³, 0.860g/cm³ to 0.89 g/cm³, 0.860 g/cm³ to 0.88 g/cm³, or 0.88 g/cm³ to 0.905 g/cm³. Resins made by Ziegler-Natta type catalysis and by metallocene or single site catalysis are included provided they fall within the density ranges so described. The metallocene or single site resins useful herein are (i) those which have an I-10/I-2 ratio of less than 5.63 and an Mw/Mn (polydispersity) of greater than (I-10/I-2)-4.63, and (ii) those based which have an I-10/I-2 ratio of equal to or greater than 5.63 and a polydispersity equal to or less than (I-10/I-2) - 4.63. Preferably the metallocene resins of group (ii) may have a polydispersity of greater than 1.5 but less than or equal to (I-10/I-2) -4.63. Suitable conditions and catalysts which can produce substantially linear metallocene resins are described in US5278272. The reference gives full descriptions of the measurement of the well-known rheological parameters I-10 and 1-2, which are flow values under different load and hence shear conditions. It also provides details of measurements of the well-known Mw/Mn ratio determination, as determined by gel-permeation chromatography.

In the case where the tie layer comprises an ethylene vinyl acetate copolymer, the relative amount of copolymerized vinyl acetate units may be of from 2 to 40 weight percent, preferably from 10 to 40 weight percent, the weight percentage being based on the total weight of the ethylene vinyl acetate copolymer. A mixture of two or more different ethylene vinyl acetate copolymers may be used as components of the tie layer in place of a single copolymer.

If the tie layer comprises an ethylene alkyl (meth)acrylate copolymer, the relative amount of copolymerized alkyl (meth)acrylate units may be of from 0.1 to 45 weight percent, preferably from 5 to 35 weight percent and still more preferably from 8 to 28 weight percent, the weight percentage being based on the total weight of the ethylene alkyl (meth)acrylate copolymer.

The olefin polymer may be modified copolymers, meaning that the copolymers are grafted and/or copolymerized with organic functionalities. Modified polymers for use in the tie layer may be modified with acid, anhydride and/or epoxide functionalities. Examples of the acids and anhydrides used to modify polymers, which may be mono-, di- or polycarboxylic acids are acrylic acid, methacrylic acid, maleic acid, maleic acid monoethylester, fumaric acid, fumaric acid, itaconic acid, crotonic acid, itaconic anhydride, maleic anhydride and substituted maleic anhydride, e.g. dimethyl maleic anhydride or citrotonic anhydride, nadic anhydride, nadic methyl anhydride, and tetrahydrophthalic anhydride, or combinations of two or more thereof, maleic anhydride being preferred.

In the case where the one or more olefin homopolymers and/or copolymers are acid-modified, it may contain of from 0.05 to 25 weight percent of an acid, the weight percentage being based on the total weight of the modified polymer.

When anhydride-modified polymer is used, it may contain from 0.03 to 10 weight %, 0.05 to 5 weight %, or 0.05 to 3 % of an anhydride, the weight percentage being based on the total weight of the modified polymer.

Examples of epoxides used to modify polymers are unsaturated epoxides comprising from four to eleven carbon atoms, such as glycidyl (meth)acrylate, allyl glycidyl ether, vinyl glycidyl ether and glycidyl itaconate, glycidyl (meth)acrylates being particularly preferred.

Epoxide-modified ethylene copolymers preferably contain from 0.03 to 15 weight percent, 0.03 to 10 weight %, 0.05 to 5 weight %, or 0.05 to 3 % of an epoxide, the weight percentage being based on the total weight of the modified ethylene copolymer. Preferably, epoxides used to modify ethylene copolymers are glycidyl (meth)acrylates. The ethylene/glycidyl (meth)acrylate copolymer may further contain copolymerized units of an alkyl (meth)acrylate having from one to six carbon atoms and an α-olefin having 1 - 8 carbon atoms. Representative alkyl (meth)acrylates include methyl (meth)acrylate, ethyl (meth)acrylate, propyl (meth)acrylate, butyl (meth)acrylate, isobutyl (meth)acrylate, hexyl (meth)acrylate, or combinations of two or more thereof. Of note are ethyl acrylate and butyl acrylate. The α-olefin may be selected from the group of propylene, octene, butene and hexane, especially propylene.

Preferably, modified ethylene copolymers comprised in the tie layer are modified with acid, anhydride and/or glycidyl (meth)acrylate functionalities.

Olefin polymer and modified polymer thereof are commercially available under the trademarks APPEEL®, BYNEL®, ELVALOY®AC, and ELVAX® from E. I. du Pont de Nemours and Company, Wilmington, Delaware (DuPont).

The ethylene copolymers suitable for use in the tie layer of the coextruded multilayer film structure of the present invention can be produced by any means known to one skilled in the art using either autoclave or tubular reactors (e.g. US3404134, US5028674, US6500888, US 3350372, and US3756996).

The tie layer may further comprise various commonly used additives and fillers such as those described above for the PHA composition.

The thickness of the tie layer of the multilayer structure may be between 1 and 100 µm, 5 and 50 µm, or 5 to 30 µm.

The sealant layer comprises one or more olefin homopolymers and/or copolymers capable of fusion bonding on another layer by conventional means of heat sealing. Preferably, the one or more olefin homopolymers and/or copolymers are chosen among polyethylene, propylene homopolymers and/or copolymers, ethylene copolymers such as for example ethylene (meth)acrylic acid copolymers and their corresponding ionomers, and/or mixtures thereof.

Most preferably, the sealant layer comprises at least one ionomer.

The ionomer can be an E/X/Y copolymer where E is ethylene, X is a C₃ to C₈ α,β-ethylenically unsaturated carboxylic acid, and Y is an optional comonomer selected from alkyl acrylate and alkyl methacrylate.

The C₃ to C₈ α,β-ethylenically unsaturated carboxylic acid may be present of from 2 weight percent to 30 weight percent, preferably of from 5 weight percent to 20 weight percent, and most preferably of from 12 weight percent to 19 weight percent, based on the total weight of the ionomer.

Suitable C₃ to Cg α,β-ethylenically unsaturated carboxylic acids may be chosen among methacrylic acid and acrylic acid, with methacrylic acid being preferred.

The comonomer selected from alkyl acrylate and alkyl methacrylate may be optionally be present of from 0.1 weight percent to 40 weight percent, preferably of from 0.1 weight percent to 10 weight percent, and is most preferably not present.

The carboxylic acid functionalities present in the at least one ionomer of the sealant layer are at least partially neutralized by one or more alkali metal, transition metal, or alkaline earth metal cations such as for example from sodium, zinc, lithium, magnesium, and calcium; and more preferably zinc or sodium.

Thus, a preferred ionomer may be chosen among E/X copolymers where E is ethylene, X is methacrylic acid partially neutralized by zinc or sodium.

In addition, the coextruded multilayer structure may comprise one or more additional functional layers such as barrier layers and other functional layers located between the at least one layer of PHA composition and the at least one sealant layer.

Suitable barrier layers may be chosen from layers comprising ethylene vinyl alcohol copolymer (EVOH), cyclic olefin copolymers and blends thereof with polyethylene, polyvinyl alcohol, and polyamides.

For example, the coextruded multilayer structure may comprise a layer of EVOH sandwiched between two layers of polyamide on each side of it, located between the at least one layer of PHA composition and the at least one sealant layer.

The coextruded multilayer structure may be produced by a triple bubble process, which can comprise the steps of coextruding a tubular multilayer film structure comprising at least one layer of PHA composition, at least one tie layer, and at least one sealant layer, cooling the coextruded tubular multilayer film structure in a first bubble, mono- or bi-axially orienting the coextruded tubular multilayer film structure under heating in a second bubble, and relaxing the mono- or bi-axially oriented coextruded tubular multilayer film structure under heating in a third bubble.

In the triple bubble process, coextruded multilayer structure can be heated in the second bubble to a temperature between the glass transition temperature and the melting point of the PHA composition.

The coextruded multilayer structure can be heated in the third bubble to a temperature between the glass transition temperature and the melting point of the PHA composition.

This triple bubble process allows for the manufacture of coextruded multilayer structures comprising at least one mono- or bi-axially oriented layer of PHA composition having excellent barrier properties as well as good mechanical properties, in combination with other functional layers.

The coextrusion may be carried out by connecting multiple extruders processing the corresponding materials, generally in the form of granulates, to a circular or annular die to form a tubular multilayer film.

The PHA composition making up the at least one corresponding layer in the multilayer film can be fed into extruder 1 (E1) by methods known in the art such as to form the outermost layer of the tubular multilayer film.

The polymer making up the tie layer in the multilayer film of the present invention can be fed into extruder 2 (E2) by methods known in the art such as to form the middle layer of the tubular multilayer film, the at least one tie layer being adjacent to the PHA composition and the sealant layer.

The polymer making up the sealant layer in the multilayer film of the present invention can be fed into the extruder 3 (E3) by methods known in the art such as to form the inner layer of the tubular multilayer film.

The first bubble (B1) is formed on one end by the tubular multilayer film, referring to FIG. 1, having a diameter (D1) exiting the die, and on the other end by the set of rolls R1 that form the hermetically closed end of the first bubble B1.

In the first bubble B1, the tubular multilayer film exiting the die and having an initial diameter D1, is quickly cooled in a way such as to obtain a minimum amount of crystallization in the structure.

Quick cooling can be obtained by quenching the exiting tubular coextruded multilayer film through a first water bath W1 having a temperature of from 0.1°C to 50°C, more preferably of from 0.1°C to 25°C and a length of from 0.4 to 5 m, preferably of from 1 to 3m. The residence time in the water quenching bath may be adjusted to range of from 1 to 20 seconds.

After cooling, a solidified tubular coextruded multilayer film can be then passed through a set of rolls which are immersed in a second water bath W2 having a temperature of from 60 to 95°C. The second water bath has a variable length of from 1 to 2 meters and the residence time in this bath depending on the speed of the film line can be of from 1 to 20 seconds.

Water bath W2 may be replaced by or supplemented with any suitable heating means, such as for example a hot air blower, an IR heater or heating coils.

Water bath W2 may pre-heat the solidified tubular coextruded multilayer film passing through to a temperature where it can be stretched without ripping, of more than 60°C, preferably of from 60°C to 85°C, more preferably of from 65°C and 75°C. In more general terms, the solidified tubular coextruded multilayer film is heated to a temperature above the glass transition temperature of the layer having the highest glass transition temperature. After being pre-heated in the second water bath W2, the softened tubular coextruded multilayer film is then inflated to form the second bubble. Inflating the softened tubular structure allows for the structure to be oriented by drawing in both MD and TD directions in the second bubble B2, at the same time.

The drawing in the MD direction can be achieved by adjusting the speed V2 of a second set of nip rolls R2 that form the upstream (towards the extruder) end of the second bubble and the speed V3 of a third set of nip rolls R3 that form the downstream (away from extruder) end of the second bubble. Generally, V3 is greater than V2, preferably 2 to 4 times greater than V2. Stated alternatively, the ratio given by V3/V2 is equivalent to the drawing ratio and is preferably of from 2 to 3.

The drawing in the TD direction can be achieved by adjusting the pressure P1 within the second bubble B2. To adjust the pressure P1, the distance L1 between a first set of nip rolls R2 that form the hermetically closed upstream (towards the extruder) end of the second bubble B2, and a second set of nip rolls R3 that form the hermetically closed downstream (away from extruder) end of the second bubble B2 can be adjusted. Reducing the distance L1 between the two sets of nip rolls (R2, R3) may increase the pressure P1, whereas increasing the distance L1 may lower the pressure P1 within the second bubble. After the drawing in the TD direction, the initial diameter D1 of the softened tubular multilayer film can be increased to a diameter D2, wherein the ratio between D2 and D1 is of from 2 to 5, preferably of from 2.5 to 3.5.

The tubular multilayer film is oriented by drawing in the second bubble B2 under heating. The heating may be provided for by the passing of the tubular multilayer film trough the water bath W2 before the set of nip rolls R2, and may be supplemented with an alternative heat source in order to keep the tubular multilayer film at a temperature of between the glass transition temperature and the melting point of the PHA composition in the second bubble. Preferably, the temperature of the coextruded multilayer film in the second bubble B2 can be of from 60°C to 85°C or 65°C to 75°C.

In the case where the second water bath W2 is replaced by or supplemented with an alternative heat source such as a hot air blower, IR heater or heating coils, the alternative heat source is preferably located immediately after the second set of nip rolls R2 sealing the upstream (towards the extruder) end of the second bubble.

While passing through the third set of nip rolls R3, the drawn tubular coextruded multilayer film can be flattened to be more easily conveyed.

After passing through the set of rolls R3 the tubular coextruded multilayer film is passed through a fourth set of nip rolls R4 that form the hermetically closed upstream (towards the extruder) end of the third bubble B3, and a fifth set of nip rolls R5 that form the hermetically closed downstream (away from extruder) end of the third bubble B3.

The fourth and fifth set of nip rolls (R4,R5) are separated by a distance L2 that can be adjusted to increase or decrease the pressure P2 within the third bubble B3 in order to allow the previously drawn tubular coextruded multilayer film to relax in TD direction.

Generally, this can be achieved by adjusting the pressure P2 in the third bubble B3 such that the pressure P2 is lesser than the pressure P1. The pressure is adjusted by modifying the distance L2 between the fourth and the fifth set of nip rolls (R4.R5) of the third bubble B3, which pressure may modify the diameter D3. The relaxation ratio is given by the ratio of D3/D2, whereas D3 is usually lesser than D2 and concurrently the ratio of D3/D2 is smaller than 1. Typically the ratio of D3/D2 can be between 0.8 and 0.95 or between 0.85 and 0.9.

The speed V4 of the fourth set of nip rolls R4 and the speed V5 of the fifth set of nip rolls may be adjusted in order to allow the previously drawn tubular coextruded multilayer film to relax in MD direction.

Generally, this can be achieved by adjusting the speed V5 of the fifth set of nip rolls R5 such that V5 is lesser than V4. The relaxation ratio is given by V5/V4, whereas V5 is usually lesser than V4 and concurrently the ratio of V5/V4 is smaller than 1. Typically the ratio of V5/V4 can be of from 0.8 to 0.95, more preferably of from 0.85 to 0.9.

The temperature of the third bubble, the pressure P2 and the ratio of V5/V4 may be adjusted individually or in parallel to achieve a tubular coextruded multilayer film exhibiting a thermal shrink ranging of from 1 to 60 %, 5 to 50 %, 10 to 40 %, or 15 to 30 %, when measured at a temperature of from 40 to 100°C.

The temperature of the third bubble can be adjusted by an IR heater, steam or heated air heater, and can be chosen depending on the desired thermal shrink to be present in the finished tubular coextruded multilayer film in MD direction and/or TD direction, upon heating to a temperature exceeding the one set for the third bubble. On the other hand, the tubular coextruded multilayer film may not exhibit any thermal shrink upon heating to a temperature inferior to the one set for the third bubble B3.

The tubular multilayer film is relaxed in the third bubble B3 under heating. In order to keep the tubular multilayer film at a temperature of between the glass transition temperature of the at least one layer of PHA composition and the melting point of the at least one layer of PHA composition in the second bubble, an appropriate heating means may be used, such as an IR heater, steam or heated air heater. Preferably, the temperature of the coextruded multilayer film in the third bubble B3 is higher than in the second bubble, more preferably of from 70°C to 120°C.

Depending in the settings chosen in the third bubble, the coextruded multilayer film structure may exhibit a thermal shrinkage of from 1% to 60%, 5 to 50 %, 10 to 40 %, 15 to 30 %, or 30 % to 50 %, when exposed to a 90°C hot water bath for 1 min.

Depending in the settings chosen in the third bubble, the coextruded multilayer film structure may exhibit a thermal shrinkage of from 1 to 10 %, 1 to 8 %, 1 to 7 %, 1 to 5 %, or 1 to 3 % when exposed to a 120°C hot air circulating oven for 1 min.

After passing through the fifth set of nip rolls R5, the tubular coextruded multilayer film is passed through a set of rolls, flattened and stored on a roll S.

Optionally, the tubular coextruded multilayer film exiting the fifth set of nip rolls R5 can be slit on one side by a slitting knife K to yield a planar coextruded multilayer film that can be stored on a roll S.

The above process provides for the manufacture of a coextruded multilayer film comprising at least one layer of mono- or bi-axially oriented PHA composition, at least one tie layer and at least one sealant layer.

The coextruded multilayer film structure may be used in particular in packaging applications, but may also be used in non-packaging applications such as for example, manufacture of tapes or textiles for building, landscaping, or garment applications. For example, the coextruded multilayer film structure may be used in the packaging article as a lidding film or as a shrink film.

Also provided is an article comprising a coextruded multilayer film structure disclosed above. The article may be used for the packaging of food ingredients having sharp, pointed and/or cutting edges such as for example coffee, rice, meat containing bone or bone splinters, dry noodles.

### EXAMPLES

A coextruded multilayer film was produced on a triple bubble (3B) manufacturing line from Kuhne Anlagenbau GmbH, Germany.

Eleven (11) extruders were connected to a circular die to coextrude a tubular multilayer structure having 11 layers.

The circular die was set to a temperature of 230°C and configured to extrude the layers in the following order, from outside (a) to inside (k):

| | |
|---|---|
| (a) | a polylactic acid resin, commercially obtainable from NatureWorks LLC under the trademark INGEO. |
| (b) | an anhydride modified ethylene acrylate resin, commercially obtainable from E. I. du Pont de Nemours and Company under the trademark BYNEL® Series 2100. |
| (c) | low density polyethylene resin, commercially obtainable from Lyondell Basell under the trademark LUPOLEN2420/COC |
| (d) | low density polyethylene resin, commercially obtainable from Lyondell Basell under the trademark LUPOLEN2420/COC |
| (e) | an anhydride modified ethylene acrylate resin, commercially obtainable from E. I. du Pont de Nemours and Company under the trademark BYNEL® Series 2100. |
| (f) | a blend of nylon 6 and nylon 6.6, commercially available from UBE Group under the trademark UBE 6034B of 6/6.6 PA |
| (g) | an ethylene vinyl alcohol copolymer (EVOH), commercially obtainable from Nippon Gihsei under the trademark SOARNOL 2904. |
| (h) | a blend of nylon 6 and nylon 6.6, commercially available from UBE Group under the trademark UBE 6034B |
| (i) | an anhydride modified ethylene acrylate resin, commercially obtainable from E. I. du Pont de Nemours and Company under the trademark BYNEL® Series 2100. |
| (j) | low density polyethylene resin, commercially obtainable from Lyondell Basell under the trademark LUPOLEN2420/COC |
| (k) | a sealant composition consisting of a blend of 95 %wt polyethylene resin and 5 %wt of polypropylene resin |

The tubular multilayer structure exiting the circular die was directed in to a water bath having a temperature of 10°C for quenching and run through a calibrator setting the diameter to 74.5 mm. The tubular multilayer structure was then conveyed through rollers into a water bath having a temperature of 88°C in order to preheat the structure, and was subsequently biaxially oriented in both machine direction (MD) and transverse direction (TD), simultaneously.

Orientation in transverse direction was achieved by heating the tubular multilayer structure to a temperature of 70°C with a hot air blower, and inflating the heated tubular multilayer structure from a diameter of 74.5 mm to a diameter of 245 mm, resulting in a stretch ratio of 3.29 in transverse direction.

Orientation in machine direction was achieved by heating the tubular multilayer structure to a temperature of 70°C with a hot air blower, and stretching the heated tubular multilayer structure by setting the downstream rollers to 2.5 times the speed of the upstream rollers resulting in a stretch ratio of 2.5 in machine direction.

The now biaxially oriented tubular multilayer structure was then flattened, cooled to room temperature and conveyed by rollers, and subsequently subjected to relaxation in both machine direction (MD) and transverse direction (TD), simultaneously.

Relaxation in transverse direction was achieved by heating the tubular multilayer structure to a temperature of 97°C with a hot air blower, and inflating the heated tubular multilayer structure and allowing it to reduce its diameter of from 245 mm to a diameter of 191 mm, resulting in a stretch ratio of 0.78 in transverse direction.

Relaxation in machine direction was achieved by heating the tubular multilayer structure to a temperature of 97°C with a hot air blower, and setting the downstream rollers to 0.92 times the speed of the upstream rollers, thus allowing the heated tubular multilayer structure to retract, resulting in a stretch ratio of 0.92 in machine direction.

The thus obtained tubular biaxially oriented coextruded multilayer film structure was then slit on one side by a slitting knife to yield a flat coextruded multilayer film structure that was wound on a roll.

In the thus obtained tubular biaxially oriented coextruded multilayer film structure having a total thickness of 75 µm, the individual layers had the following thickness:

| | (a) | (b) | (c) | (d) | (e) | (f) | (g) | (h) | (i) | (j) | (k) |
|---|---|---|---|---|---|---|---|---|---|---|---|
| Thickness(µm) | 7.5 | 5.25 | 21 | 3 | 3.75 | 6 | 4.5 | 6 | 3.75 | 3 | 11.25 |

In a comparative experiment, a prefabricated, biaxially oriented polylactic acid film, having a thickness of 20 micron and commercially obtainable from Treofan France (Mantes-la-Jolie) under designation PLA121, was extrusion coated by depositing a melt of sealant composition on said polylactic acid film.

The melt had a temperature of 300 °C when exiting the extruder die, and caused the polylactic acid film to heat up to 120 °C upon contact with the melt.

Upon contact of the melt with the polylactic acid film, the polylactic acid film shrunk in transverse and machine direction and exhibited creases and wrinkles. Furthermore, the adhesion between the sealant composition was inferior to 1 N/ 15 mm.

The sealant composition consisted of 80 weight percent of a first modified ethylene acrylate resins (available from E. I. du Pont de Nemours and Company under the trademark BYNEL® 22E780) and 20 weight percent of a second modified ethylene acrylate resin (available from E. I. du Pont de Nemours and Company under the trademark APPEEL® 20D855).

As can be derived from the above description of the comparative experiment, it is currently not possible to manufacture commercially viable multilayer film structures comprising a layer of oriented polylactic acid by conventional methods in which the oriented polylactic acid film is heated up, without generating defects due to the heat shrinkage of the oriented polylactic acid film.

In contrast, the manufacture of such multilayer structures by way of the triple bubble process circumvents these problems and provides for an efficient alternative to "cold" lamination methods employing solvent-based adhesives.

## Claims

1. A process for producing a coextruded multilayer structure comprising
coextruding a poly(hydroxyalkanoic acid) polymer composition, a tie layer composition, and a sealant layer composition to produce a multilayer structure;
cooling the multilayer film structure in a first bubble to produce a tubular multilayer structure;
orienting the tubular multilayer structure under heating in a second bubble to produce an oriented tubular multilayer structure; and
relaxing the oriented tubular multilayer structure under heating in a third bubble;
wherein the tie layer composition comprises one or more olefin homopolymers and/or copolymers, and wherein the sealant layer composition comprises one or more olefin homopolymers and/or copolymers capable of fusion bonding on another layer by conventional means of heat sealing.

2. The process of claim 1 wherein the orienting is carried out at a temperature between the glass transition temperature and the melting point of the poly(hydroxyalkanoic acid) polymer composition, and wherein the orienting is carried out at a temperature from 60 to 85 °C.

3. The process of claim 1 or 2 wherein the relaxing is carried out at a temperature between the glass transition temperature and the melting point of the poly(hydroxyalkanoic acid) polymer composition, and wherein the relaxing is carried out at a temperature from 70 to 120 °C.

4. The process of claim 1, wherein the coextruded multilayer structure comprises at least one layer of monoaxially or biaxially oriented poly(hydroxyalkanoic acid) composition, at least one tie layer, and at least one sealant layer, and wherein the structure is a film or sheet.

5. The process of claim 4, wherein the coextruded multilayer structure has a thermal shrinkage from 1 to 60%, or 30 to 50%, in a 90°C water bath for 1 min.

6. The process of claim 4, wherein the coextruded multilayer structure has a thermal shrinkage from 1 to 10%, or 1 to 3%, in a 120°C water bath for 1 min.

7. The process of claim 4, 5, or 6, wherein the poly(hydroxyalkanoic acid) composition comprises a polycondensate of glycolic acid, lactic acid, hydroxybutyric acid, or combinations of two or more thereof.

## Patentansprüche

1. Ein Verfahren zum Herstellen einer koextrudierten Mehrschichtstruktur, das Folgendes beinhaltet:
Koextrudieren einer Poly(hydroxyalkansäure)-Polymerzusammensetzung, einer Haftschichtzusammensetzung und einer Versiegelungsschichtzusammensetzung, um eine Mehrschichtstruktur herzustellen;
Abkühlen der Mehrschichtfolienstruktur in einer ersten Blase, um eine röhrenförmige Mehrschichtstruktur herzustellen;
Ausrichten der röhrenförmigen Mehrschichtstruktur bei Hitze in einer zweiten Blase, um eine ausgerichtete röhrenförmige Mehrschichtstruktur herzustellen; und
Entspannen der ausgerichteten röhrenförmigen Mehrschichtstruktur bei Hitze in einer dritten Blase;
wobei die Haftschichtzusammensetzung ein oder mehrere Olefinhomopolymere und/oder -copolymere beinhaltet und wobei die
Versiegelungsschichtzusammensetzung ein oder mehrere Olefinhomopolymere und/oder -copolymere beinhaltet, die zur Direktverklebung auf einer anderen Schicht durch herkömmliche Mittel der Heißversiegelung fähig sind.

2. Verfahren gemäß Anspruch 1, wobei das Ausrichten bei einer Temperatur zwischen der Glasübergangstemperatur und dem Schmelzpunkt der Poly(hydroxyalkansäure)-Polymerzusammensetzung ausgeführt wird und wobei das Ausrichten bei einer Temperatur von 60 bis 85 °C ausgeführt wird.

3. Verfahren gemäß Anspruch 1 oder 2, wobei das Entspannen bei einer Temperatur zwischen der Glasübergangstemperatur und dem Schmelzpunkt der Poly(hydroxyalkansäure)-Polymerzusammensetzung ausgeführt wird und wobei das Entspannen bei einer Temperatur von 70 bis 120 °C ausgeführt wird.

4. Verfahren gemäß Anspruch 1, wobei die koextrudierte Mehrschichtstruktur mindestens eine Schicht monoaxial oder biaxial ausgerichteter Poly(hydroxyalkansäure)-Zusammensetzung, mindestens eine Haftschicht und mindestens eine Versiegelungsschicht beinhaltet und wobei die Struktur eine Folie oder ein Flächengebilde ist.

5. Verfahren gemäß Anspruch 4, wobei die koextrudierte Mehrschichtstruktur eine Wärmeschrumpfung von 1 bis 60 % oder 30 bis 50 % in einem 1-minütigen Wasserbad bei 90 °C aufweist.

6. Verfahren gemäß Anspruch 4, wobei die koextrudierte Mehrschichtstruktur eine Wärmeschrumpfung von 1 bis 10 % oder 1 bis 3 % in einem 1-minütigen Wasserbad bei 120 °C aufweist.

7. Verfahren gemäß Anspruch 4, 5 oder 6, wobei die Poly(hydroxyalkansäure)-Zusammensetzung ein Polykondensat von Glycolsäure, Milchsäure, Hydroxybutansäure oder Kombinationen von zwei oder mehr davon beinhaltet.

## Revendications

1. Un procédé pour produire une structure multicouche coextrudée comprenant
le fait de coextruder une composition polymère de poly(acide hydroxyalcanoïque), une composition de couche de liaison, et une composition de couche de matériau d'étanchéité afin de produire une structure multicouche ;
le fait de refroidir la structure de film multicouche dans une première bulle afin de produire une structure multicouche tubulaire ;
le fait d'orienter la structure multicouche tubulaire sous chaleur dans une deuxième bulle afin de produire une structure multicouche tubulaire orientée ; et
le fait de détendre la structure multicouche tubulaire orientée sous chaleur dans une troisième bulle ;
dans lequel la composition de couche de liaison comprend un ou plusieurs copolymères et/ou homopolymères d'oléfine, et dans lequel la composition de couche de matériau d'étanchéité comprend un ou plusieurs copolymères et/ou homopolymères d'oléfine à même de se coller par fusion sur une autre couche par un moyen traditionnel consistant en un thermoscellage.

2. Le procédé de la revendication 1 dans lequel l'orientation est effectuée à une température entre la température de transition vitreuse et le point de fusion de la composition polymère de poly(acide hydroxyalcanoïque), et dans lequel l'orientation est effectuée à une température allant de 60 à 85 °C.

3. Le procédé de la revendication 1 ou de la revendication 2 dans lequel la détente est effectuée à une température entre la température de transition vitreuse et le point de fusion de la composition polymère de poly(acide hydroxyalcanoïque), et dans lequel la détente est effectuée à une température allant de 70 à 120 °C.

4. Le procédé de la revendication 1, dans lequel la structure multicouche coextrudée comprend au moins une couche de composition de poly(acide hydroxyalcanoïque) monoaxialement ou biaxialement orientée, au moins une couche de liaison, et au moins une couche de matériau d'étanchéité, et dans lequel la structure est un film ou une feuille.

5. Le procédé de la revendication 4, dans lequel la structure multicouche coextrudée a une contraction thermique allant de 1 à 60 %, ou 30 à 50 %, dans un bain d'eau à 90 °C pendant 1 min.

6. Le procédé de la revendication 4, dans lequel la structure multicouche coextrudée a une contraction thermique allant de 1 à 10 %, ou 1 à 3 %, dans un bain d'eau à 120 °C pendant 1 min.

7. Le procédé de la revendication 4, 5, ou 6, dans lequel la composition de poly(acide hydroxyalcanoïque) comprend un polycondensé d'acide glycolique, d'acide lactique, d'acide hydroxybutyrique, ou de combinaisons de deux de ceux-ci ou plus.
